## Europäisches Patentamt
## European Patent Office
## Office européen des brevets

(19)

(11) Numéro de publication: **0 127 225**
**B1**

(12) **FASCICULE DE BREVET EUROPEEN**

(45) Date de publication du fascicule du brevet:
**19.11.87**

(21) Numéro de dépôt: **84200690.0**

(22) Date de dépôt: **15.05.84**

(51) Int. Cl.⁴: **B 62 D 27/06**

(54) Structure de véhicule automobile et procédé pour son assemblage.

(30) Priorité: **25.05.83 IT 6757883**

(43) Date de publication de la demande:
**05.12.84 Bulletin 84/49**

(45) Mention de la délivrance du brevet:
**19.11.87 Bulletin 87/47**

(84) Etats contractants désignés:
**CH DE FR GB LI NL SE**

(56) Documents cités:
**FR - A - 1 565 920**
**FR - A - 2 384 666**
**FR - E - 54 422**
**US - A - 2 678 231**

(73) Titulaire: **RENAULT ITALIA S.p.A., Via Tiburtina, 1159, I-00156 Rome (IT)**

(72) Inventeur: **Gandini, Marcello, Via Rosta 40, I-10090 Villarbasse Torino (IT)**

(74) Mandataire: **de Simone, Domenico et al, Ing. Barzanò & Zanardo Roma S.p.A. Via Piemonte 26, I-00187 Roma (IT)**

ACTORUM AG

# Description

La présente invention concerne une structure de véhicule automobile résultant de l'assemblage d'une pluralité d'ensembles constructifs partiels, parmi lesquels principalement un groupe moto-propulseur, une carrosserie et un élément transversal d'assemblage du groupe moto-propulseur, ménagé pour être connecté à la carrosserie et pour recevoir sur une de ses faces les moyens de traction; l'invention concerne aussi un procédé pour l'assemblage d'une telle structure de véhicule automobile.

L'adoption, désormais generalisée, de procédés d'assemblage des structures de véhicules en partant d'ensembles constructifs partiels, assemblés séparément, a permis de rationaliser les méthodes de construction et d'en permettre une meilleure organisation. En particulier, suivant le brevet US-A-2 678 231 on prévoit des éléments transversaux d'assemblage du groupe moto-propulseur, supportant les moyens de traction et connectés à la carrosserie. Cependant, selon la technique actuelle, après que le groupe moto-propulseur a été relié à la carrosserie, sur l'ensemble ainsi constitué doivent être montés de nombreux appareils disposés à l'intérieur de l'habitacle, tels que les organes de commande et de contrôle, principalement les leviers, les pédales et le volant de direction, les instruments de contrôle, l'équipement électrique du tableau de bord, les moyens de ventilation et éventuellement de chauffage de l'habitacle, etc., et cela par des opérations d'assemblage qui résultent assez difficiles parce qu'elles doivent être effectuées dans l'espace limité de l'habitacle, par des ouvriers qui travaillent en une position incommode, ce qui donne lieu à des temps de travail assez longs et aux coûts élevés qui en résultent, et en outre, souvent, à des exécutions défectueuses des installations. Un tel problème peut être évité dans les véhicules pourvus de chassis, où tous les appareils peuvent être installés avant de déposer la carrosserie sur le chassis (FR-A-2 384 666), mais cela, évidemment, n'est pas possible dans les véhicules, maintenant les plus répandus, qui sont dépourvus de chassis.

Le but de la présente invention est celui de rationaliser ultérieurement les procédés d'assemblage de véhicules automobiles, particulièrement en permettant d'éviter des opérations d'assemblage de composants à l'intérieur de l'habitacle avec les inconvénients qui en dérivent.

Ce but est atteint, suivant l'invention, par le fait que, dans une structure de véhicule du type indiqué dans le préambule, ledit élément transversal est ménagé pour recevoir sur sa face tournée vers la carrosserie, avant sa connection à la carrosserie même, au moins les organes principaux de commande et de contrôle, parmi lesquels les leviers, les pédales et le volant de direction, ainsi que les principaux accessoires de bord, parmi lesquels principalement les instruments de contrôle, l'équipement électrique du tableau de bord et les moyens de ventilation de l'habitacle.

Le procédé suivant l'invention, pour l'assemblage de la structure d'un véhicule automobile, est du type dans lequel le groupe moto-propulseur est assemblé sur une face d'un élément transversal d'assemblage, une carrosserie est montée séparément, et ensuite ladite carrosserie est connectée audit élément transversal d'assemblage supportant le groupe moto-propulseur, et il est caractérisé en ce qu'au moins la partie principale des organes de commande et de contrôle est assemblée sur la face tournée vers la carrosserie dudit élément transversal, avant d'effectuer la connection de la carrosserie.

Grâce à ces caractéristiques, l'application de l'invention permet d'effectuer l'installation de la plupart ou de tous les appareils destinés à se trouver à l'intérieur de l'habitacle, sur la face postérieure dudit élément transversal d'assemblage, lors qu'il est encore séparé de la carrosserie, et il est donc complètement accessible sans limitation d'espace opératif, en réduisant ainsi d'une manière substantielle le nombre des opérations à effectuer à l'intérieur de l'habitacle après que le groupe moto-propulseur a été connecté à la carrosserie. Dans une application complète de l'idée de l'invention, il est même possible de compléter totalement la finition, même esthétique, du tableau de bord, avant de monter sur la carrosserie l'élément transversal d'assemblage, de façon à éliminer complètement la nécessité d'opérations à effectuer à l'intérieur de l'habitacle. Ainsi, il devient possible d'effectuer par des moyens automatiques l'application de beaucoup de composants qui actuellement doivent être montés à la main à cause de l'accessibilité limitée de la zone de montage; mais même les composants que l'on doit, ou qu'il convient en tous cas, de monter à la main, comportent des opérations de montage sans difficulté et sans incommodité, qui peuvent être effectuées rapidement et d'une façon irréprochable même par une main d'œuvre non qualifiée.

L'application de l'invention permet donc de rationaliser et d'organiser mieux les opérations relatives à l'assemblage de véhicules, en obtenant ainsi des réductions importantes dans les temps et les coûts de travail, et en améliorant la qualité des résultats.

Les caractéristiques et les avantages de l'objet de l'invention résulteront plus clairement de la suivante description d'un exemple de réalisation non limitatif, représenté schématiquement dans les dessins annexés, dans lesquels:

La figure 1 est une vue éclatée de trois ensembles constructifs partiels destinés à être assemblés dans la structure d'un véhicule automobile;

La figure 2 illustre deux phases intermédiaires du procédé d'assemblage entre le groupe moto-propulseur et la carrosserie;

La figure 3 illustre la structure assemblée du véhicule;

La figure 4 représente une vue frontale de l'ensemble constructif partiel comprenant l'élément transversal d'assemblage et le groupe moto-propulseur.

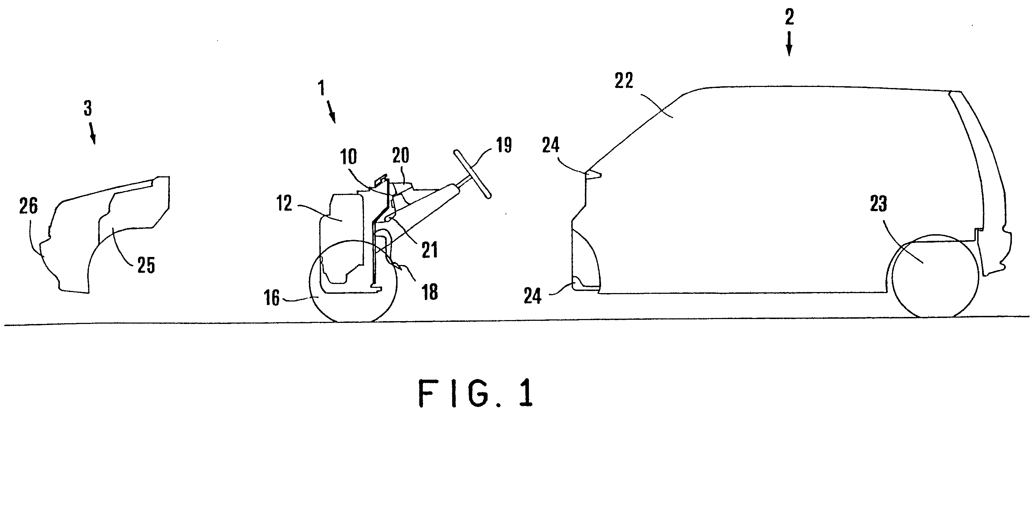

Faisant référence à la figure 1, dans l'exemple représenté la structure de véhicule selon l'invention comporte trois groupes constructifs partiels, et précisément un groupe moto-propulseur 1, une carrosserie 2 avec les roues postérieures et un capot antérieur 3.

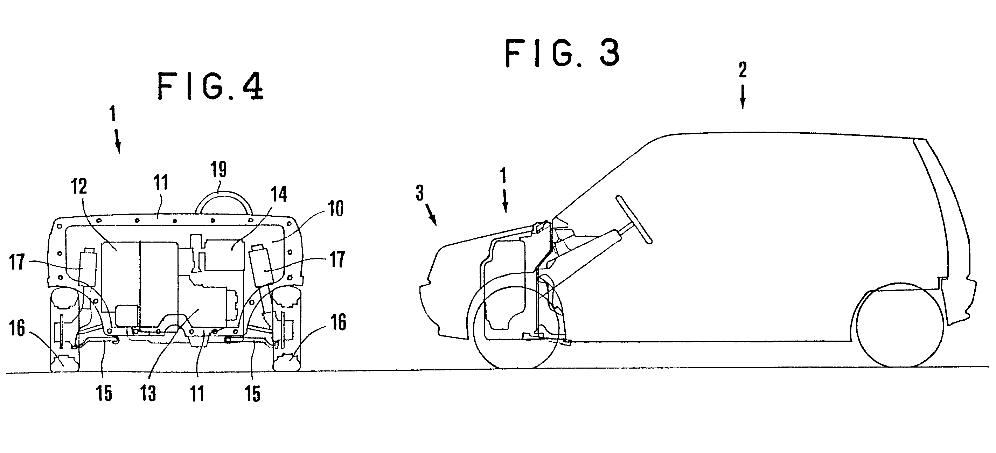

Le groupe moto-propulseur 1 est assemblé sur un élément transversal d'assemblage 10 qui, comme représenté dans la figure 4, est pourvu dans ce cas d'une bride périphérique 11 qui s'étend tout autour dudit élément et présente à des distances uniformes des trous pour des boulons de connexion. L'élément transversal d'assemblage 10 est configuré, dans ce cas, substantiellement comme la plaque transversale ou para-feu qui habituellement fait partie de la structure de la carrosserie. Il est arrangé de façon à recevoir, sur ses deux faces, des appareils et des composants destinés à être soutenus par ledit élément. En particulier, le moteur 12, la boîte du changement de vitesse 13, la batterie 14, les suspensions 15 des roues antérieures 16, les amortisseurs 17, etc., c'est à dire les composants principaux du groupe moto-propulseur, sont tous connectés à la face antérieure de l'élément transversal d'assemblage 10. De leur côté, les pédales 18, le volant de direction 19, le tableau de bord 20 avec les appareils et les instruments relatifs, les ouvertures d'air 21 pour la ventilation de l'habitacle, etc., c'est à dire les composants principaux de l'equipement intérieur de bord, sont tous connectés à la face postérieure de l'élément transversal d'assemblage 10. Comme on peut facilement le remarquer dans la figure 1, tous ces composants peuvent être appliqués à l'élément transversal d'assemblage 10 de la façon la plus rationnelle, ledit élément étant complètement libre de tous les côtés et par conséquent accessible pour le montage des composants, soit par des équipements mécaniques, soit par des ouvriers qui peuvent alors travailler dans les meilleures conditions. Selon que l'on désire appliquer les idées de l'invention d'une façon plus ou moins complète, on peut modifier le nombre et la nature des composants ainsi assemblés sur l'élément transversal d'assemblage 10 lorsqu'il est isolé; il s'agira quand même tout au moins des composants principaux soit du groupe moto-propulseur soit de l'équipement intérieur, et seulement ces composants, si l'on désire simplement de réduire le nombre des assemblages à effectuer à l'intérieur de l'habitacle; mais si l'on desire tirer entièrement avantage des possibilités de l'invention, sur la face antérieure de l'élément transversal d'assemblage 10 on pourra monter tous les composants, même ceux de moindre importance, du groupe moto-propulseur, et sur la face postérieure tous les composants intérieurs, y compris les organes de commande et de contrôle, l'équipement du tableau de bord, différents instruments et appareils et même les finitions esthétiques internes, afin d'éliminer toute opération successive à l'intérieur.

De son côté, le groupe de la carrosserie 2 comprend la carrosserie 22 de l'habitacle, avec portières, sièges etc. (non représentés), avec les roues postérieures 23 du véhicule, et avec une bride antérieure 24, correspondante à la bride 11 de l'élément transvérsal d'assemblage 10 et prémontée pour être connectée à ladite bride 11, par exemple au moyen de boulons.

Enfin, le groupe 3 du capot antérieur peut être constitué principalement par une coquille 25 en une seule pièce, qui peut porter les pare-chocs 26 (d'une seule pièce avec la coquille ou appliqués sur cette dernière), des organes intérieurs éventuels d'amortissement des chocs, les projecteurs et les feux antérieurs (non représentés) et d'autres accessoires. La coquille 25 est destinée à être connectée elle-même à l'élément transversal d'assemblage 10 de façon à pouvoir être soulevée, ou à pouvoir être détachée complètement, pour permettre l'accès au groupe moto-propulseur.

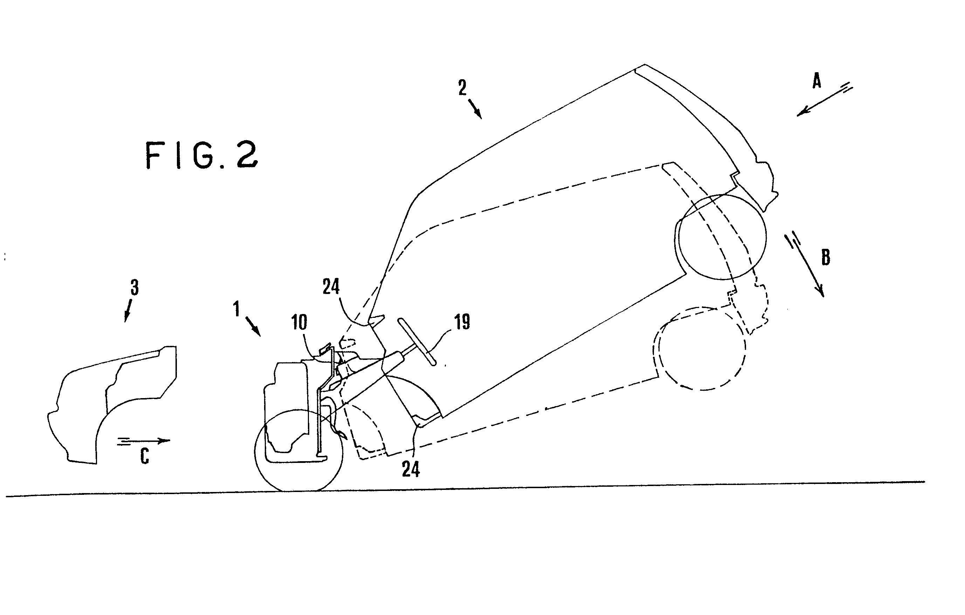

Pour effectuer l'assemblage des ensembles constructifs partiels décrits, comme représenté dans la figure 2, on peut avantageusement procéder de sorte à maintenir le groupe moto-propulseur 1 avec son élément transversal d'assemblage 10 en position verticale, à approcher le groupe 2 de la carrosserie, suivant la flèche A, en position et suivant une direction inclinées en avant et vers le bas, en faisant ainsi passer la bride antérieure 24 de la carrosserie autour des composants saillant en arrière de l'élément transversal d'assemblage 10, parmi lesquels particulièrement le volant de direction 19, puis à faire osciller la carrosserie 2 vers le bas, suivant la flèche courbe B, jusqu'à la position horizontale, et à effectuer la liaison entre les brides 11 et 24; enfin, le capot antérieur 3 peut être approché suivant la flèche C et connecté à l'élément transversal d'assemblage 10, en obtenant ainsi la structure complète selon la figure 3.

Dans la description qui précède on a supposé que le train arrière faisait partie de l'ensemble constructif partiel de la carrosserie. Cependant, on doit noter que, dans l'application du procédé selon l'invention, il est aussi possible de faire avancer un train arrière dans la ligne de production du groupe moto-propulseur, de préparer séparément une carrosserie dépourvue de l'essieu arrière, et de connecter le train arrière à la carrosserie lors de la liaison de cette dernière au groupe moto-propulseur. Cette manière de procéder est avantageuse en ce qu'elle permet d'effectuer aussi, avant assemblage de la carrosserie et au moyen de tubulures flexibles, les connexions des freins des roues arrière au groupe moto-propulseur, dans l'ensemble duquel se trouve le maître-cylindre de freinage, en évitant ainsi la nécessité de procéder à l'exécution de ces connexions après la connexion de la carrosserie, et par conséquent en des conditions moins faciles.

Naturellement, la forme particulière des parties décrites peut être amplement modifiée en fonction des diverses exigences des différents véhicules, qui peuvent être des voitures de types différents, des véhicules pour usage mixte ou des véhicules pour le transport de marchandises. De façon similaire peuvent varier la forme et la disposition des moyens de connexion entre l'élément transversal d'assemblage et le groupe comprenant la carrosserie, ainsi que la nature de ces moyens de connexion. La connexion elle-même peut être d'un type fixe, effectuée, par exemple, par des éléments rivetés ou par des soudures, mais préférablement elle peut être d'un type démontable, étant effectuée par exemple au moyens de boulons, ce qui permet de tirer avantage des caractéristiques de l'invention, non seulement pendant la fabrication du véhicule, mais aussi successivement à l'occasion des plus importantes interventions de réparation ou d'entretien. l'application de l'invention autorise la construction de l'élément de capot antérieur, comme indiqué, en une pièce unique destinée à être soulevée ou détachée dans son ensemble pour l'accès au groupe moteur. Néanmoins le capot pourrait aussi avoir une structure traditionnelle comprenant une partie de carrosserie fixe et des volets ouvrables ou amovibles. Enfin, il est entendu que certains éléments du groupe moto-propulseur, comme la boîte de vitesses, le différentiel et les roues motrices, peuvent aussi ne pas être montés sur l'élément transversal d'assemblage lorsque le véhicule n'est pas du type «tout avant», mais possède un moteur antérieur et des roues de traction postérieures.

**Revendications**

1. Structure de véhicule automobile résultant de l'assemblage d'une pluralité d'ensembles constructifs partiels, parmi lesquels principalement un groupe moto-propulseur (1), une carrosserie (2) et un élément transversal (10) d'assemblage du groupe moto-propulseur, ménagé pour être connecté à la carrosserie (2) et pour recevoir sur une de ses faces les moyens de traction, parmi lesquels principalement le moteur (12) avec ses annexes, la transmission (13) et les suspensions (15) avec une couple de roues (16) du véhicule, caractérisé en ce que ledit élément transversal (10) est ménagé pour recevoir sur son autre face, tournée vers la carrosserie (2), avant sa connection à la carrosserie même, au moins les organes principaux de commande et de contrôle, parmi lesquels les leviers, les pédales (18) et le volant de direction (19), ainsi que les principaux accessoires de bord, parmi lesquels principalement les instruments de contrôle, l'équipement électrique du tableau de bord (20) et les moyens (21) de ventilation de l'habitacle.

2. Structure de véhicule automobile selon la revendication 1, caractérisée en ce que ledit élément transversal (10) d'assemblage du groupe moto-propulseur (1) est pourvu d'une bride périphérique (11) comportant des moyens pour sa connexion à ladite carrosserie (2).

3. Structure de véhicule automobile selon la revendication 2, caractérisée en ce que lesdits moyens de connexion entre la bride périphérique (11) de l'élément transversal (10) d'assemblage et la carrosserie (2) sont d'un type démontable, tels que des boulons.

4. Structure de véhicule automobile selon la revendication 1, caractérisée en ce que ledit élément transversal (10) d'assemblage supporte aussi des composants destinés à coopérer opérativement avec des parties rigidement connectées à la carrosserie (2), tel que l'essuie-glace avec son balai.

5. Structure de véhicule automobile selon la revendication 1, caractérisée en ce que ledit élément transversal (10) d'assemblage supporte substantiellement tous les composants techniques et esthétiques du tableau de bord (20) du véhicule.

6. Structure de véhicule automobile selon la revendication 1, caractérisée en ce qu'elle comprend aussi un capot antérieur (3) sensiblement en une seule pièce, relié audit élément transversal (10) d'assemblage du groupe moto-propulseur (1) de sorte à pouvoir être soulevé ou détaché.

7. Procédé pour l'assemblage de la structure d'un véhicule automobile, du type dans lequel le groupe moto-propulseur (1) est assemblé sur une face d'un élément transversal (10) d'assemblage, une carrosserie (2) est montée séparément, et ensuite ladite carrosserie (2) est connectée audit élément transversal (10) d'assemblage supportant le groupe moto-propulseur (1), caractérisé en ce qu'au moins la partie principale des organes de commande et de contrôle (18, 19) est assemblée sur la face tournée vers la carrosserie dudit élément transversal (10), avant d'effectuer la connection de la carrosserie (2).

8. Procédé de montage selon la revendication 7, caractérisé en ce que la connexion de l'ensemble de la carrosserie (2) à l'ensemble du groupe moto-propulseur (1) monté sur l'élément transversal (10) d'assemblage est effectuée en retenant l'élément transversal (10) d'assemblage en position sensiblement verticale, en approchant dudit élément (10) la carrosserie (2) en position et suivant une direction (A) inclinées en avant et vers le bas, en faisant ensuite osciller la carrosserie vers le bas (B) jusqu'à la position horizontale et en effectuant la liaison entre les deux ensembles (1, 2).

9. Procédé de montage selon la revendication 7, caractérisé en ce qu'on monte un train postérieur (23) dans la ligne de production du groupe moto-propulseur (1), on effectue les connexions des conduites des freins des roues postérieures (23) au maître-cylindre correspondant monté dans le groupe moto-propulseur (1), et successivement on connecte le train arrière (23) à la carrosserie (2) lors de la liaison de cette dernière au groupe moto-propulseur (1).

**Patentansprüche**

1. Kraftwagenstruktur erhalten durch Zusammenbau einer Mehrzahl von Teilbaugruppen, unter dessen hauptsächlich eine Motor-Triebwerk-Gruppe (1); eine Karosserie (2) und ein Querelement (10) für die Montage der Motor-Triebwerk-Gruppe (1), eingerichtet für die Befestigung an die Karosserie (2) und zum Aufnehmen auf einer von seinen Flächen von Antriebsmitteln, unter denen hauptsächlich der Motor (12) mit seinen Anbauten, das Getriebe (13) und die Aufhängungen (15) mit einem Wagen-Radpaar (16), dadurch gekennzeichnet, dass das genannte Querelement (10) zum Aufnehmen auf seiner anderen, der Karosserie (2) gegenüberstehenden Fläche, vor seiner Befestigung an die Karosserie selbst, von Antrieb- und Kontrolle-Hauptelemente eingerichtet ist, unter denen die Hebel, die Pedale (18) und das Lenkrad (19), sowie die Kraftfahrzeug-Hauptzubehörteile, unter denen hauptsächlich die Kontroll-Geräte, die elektrische Ausrüstung des Instrumentenbretts (20) und die Mittel zur Lüftung des Wageninnenraumes.

2. Kraftwagenstruktur nach Anspruch 1, dadurch gekennzeichnet, dass das genannte Montage-Querelement (10) der Motor-Triebwerk-Gruppe (1) mit einem peripherischen Bügel (11) ausgerüstet ist, der Mittel zur Verbindung an die genannte Karosserie (2) aufweist.

3. Kraftwagenstruktur nach Anspruch 2, dadurch gekennzeichnet, dass die genannten Verbindungsmittel zwischen dem peripherischen Bügel (11) des Querelements (10) und der Karosserie (2) entfernbarer Art sind, wie z.Bsp. Schrauben-bolzen.

4. Kraftwagenstruktur nach Anspruch 1, dadurch gekennzeichnet, dass das genannte Montage-Querelement (10) auch Bauteile trägt die zur wirksamen Mitarbeit mit den an die Karosserie (2) festverbundenen Teilen, wie der Scheibenwischer mit seinem Wischblatt, bestimmt sind.

5. Kraftwagenstruktur nach Anspruch 1, dadurch gekennzeichnet, dass das genannte Montage-Querelement (10) wesentlich alle technische und ästhetische Bauteile des Instrumentenbrettes (20) des Wagens trägt.

6. Kraftwagenstruktur nach Anspruch 1, dadurch gekennzeichnet, dass sie auch eine vordere, wesentlich einstuckige Haube (3) aufweist, welche an das genannte Querelement (10) zur Montage der Motor-Triebwerk-Gruppe (1) verbunden ist, so dass sie aufgehoben oder abgenommen werden kann.

7. Verfahren zum Zusammenbau der Kraftwagenstruktur, bei der die Motor-Triebwerk-Gruppe (1) auf einer Fläche eines Montage-Querelementes (10) montiert ist, eine Karosserie (2) separat montiert und danach an das genannte, die Motor-Triebwerk-Gruppe (1) abstützende Montage-Querelement (10) befestigt ist, dadurch gekennzeichnet, dass mindestens der Hauptteil der Antrieb- und Kontrol-Elemente (18, 19) an der zur Karosserie gerichteten Fläche des genannten Querelements (10) montiert ist, bevor die Karosserie (2) befestigt wird.

8. Verfahren nach Anspruch 7, dadurch gekennzeichnet, dass für die Verbindung der Karosserie-Gruppe (1) an die mit dem Querelement (10) verbundene Motor-Triebwerk-Gruppe des Querelement (10) in einer wesentlich senkrechten Stellung gehalten wird, die Karosserie (2) an das Querelement längs einer vorwärts und abwärts gerichteten Richtung (A) angenährt und danach die Karosserie nach unten (B) bis zur waagerechten Stellung geschwänkt wird, wobei die beiden Gruppen (1, 2) miteinander verbunden werden.

9. Verfahren nach Anspruch 7, dadurch gekennzeichnet, dass eine Hinterachse (23) in der Fertigungsstrasse der Motor-Triebwerk-Gruppe (1) eingebaut wird, die Leitungen der Bremse der Hinterräder (23) an das entsprechende, in die Motor-Triebwerk-Gruppe (1) eingebaute Meisterzylinder verbunden werden und danach die Hinterachse (23) an die Karosserie (2), gleichzeitig mit der Verbindung derselben an die Motor-Triebwerk-Gruppe (1), verbunden wird.

## Claims

1. A motorcar structure obtained by assembling a plurality of partial constructive units, among which principally a propelling motor group (1), a bodywork (2) and a cross-element (10) for assembling the propelling motor group, arranged to be connected with the body-work (2) and to receive on one of its faces traction means, among which principally a motor (12) with its accessories, gearing (13) and suspensions (15) with a pair of wheels (16) of the car, characterized in that said cross-element (10) is arranged to recieve on its other face, turned towards the bodywork (2), before its connection to the bodywork itself, at least the main drive and control elements, among which the levers, pedals (18) and steering wheel (19), as well as the main car accessories, among which control instruments, electric equipment of the car dashboard (20) and means (21) for ventilation of the passenger compartment.

2. A motorcar structure according to claim 1, characterized in that said cross-element (10) for assembling the propelling motor group (1) is provided with peripheral bracket (11) having means for its connection with said bodywork (2).

3. A motorcar structure according to claim 2, characterized in that said connecting means between the peripheral bracket (11) of the assembling cross-element (10 and the bodywork (2) are of removable kind, such as screw bolts.

4. A motorcar structure according to claim 1, characterized in that said assembling cross-element (10 bears also components intended to operatively cooperate with parts which are rigidilly connected to the bodywork (2), such as windscreen wiper with its blade.

5. A motorcar structure according to claim 1, characterized in that said assembling cross-element (10) substantially bears all the technic and aesthetic components of the dashboard (20).

6. A motorcar structure according to claim 1, characterized in that it comprises also a sensibly single piece front hood (3) connected to said assembling cross-element (10) of the propelling motor group (1) so as to allow its lifting or removal.

7. A process for assembling the motorcar structure of the kind in which the propelling motor group (1) is assembled onto a face of an assembling cross-element (10), a bodywork (2) is separately assembled and then said bodywork (2) is connected to said assembling cross-element (10) bearing the propelling motor group (1), characterized in that at least the main part of the driving and control elements (18, 19) is assembled onto the face, turned towards the bodywork, of said cross-element (10), before performing the connection of the bodywork (2).

8. An assembling process according to claim 7, characterized in that the connection of the bodywork unit (2) to the propelling motor group (1), mounted on the assembling cross-element (10) is performed by keeping the assembling cross-element (10) in a sensibly vertical position, approaching to said element (10) the bodywork (2) in a frontally and downwardly sloped direction (A) swinging then the bodywork in downward direction (B) into the horizontal position and carrying out the connection between the both units (1, 2).

9. An assembling process according to claim 7, characterized in that a rear carriage (23) is mounted in the production line of the propelling motor group (1), there are performed the connections of the brake pipes of the rear wheels (23) with the corresponding master cylinder mounted within the propelling motor group (1) and then the forecarriage (23) is connected to the bodywork (2) during the connection of this last to the propelling motor group (1).

FIG. 1

# FIG.2

FIG. 3

FIG. 4